Europäisches Patentamt

European Patent Office

Office européen des brevets

(19)

(11) Veröffentlichungsnummer: **0 368 076**

**A2**

(12) **EUROPÄISCHE PATENTANMELDUNG**

(21) Anmeldenummer: **89119761.8**

(51) Int. Cl.⁵: **B01D 25/26**

(22) Anmeldetag: **24.10.89**

(30) Priorität: **08.11.88 DE 8813974 U**

(43) Veröffentlichungstag der Anmeldung:
**16.05.90 Patentblatt 90/20**

(84) Benannte Vertragsstaaten:
**AT BE CH DE ES FR GB IT LI LU NL**

(71) Anmelder: **Albert Handtmann Armaturenfabrik GmbH & Co. KG**
**Birkenallee 25-29**
**D-7950 Biberach 1(DE)**

Anmelder: **EAS PATENT-UND KNOWHOW-VERWERTUNGS GMBH**
**Kellerweg 23**
**D-7074 Mögglingen(DE)**

(72) Erfinder: **Westermeier, Peter**
**Alte Biberacher Strasse 30**
**D-7951 Warthausen(DE)**
Erfinder: **Kurz, Wolfgang**
**Uhlandring 26**
**D-7959 Stetten(DE)**
Erfinder: **Fast, Udo**
**Felsenweg 2**
**D-7950 Biberach 1(DE)**
Erfinder: **Schafft, Helmut**
**Kellerweg 23**
**D-7074 Mögglingen(DE)**
Erfinder: **Handtmann, Thomas**
**Voralberger Strasse 25**
**D-7950 Biberach 1(DE)**

(74) Vertreter: **Patentanwälte Grünecker, Kinkeldey, Stockmair & Partner**
**Maximilianstrasse 58**
**D-8000 München 22(DE)**

(54) **Filtervorrichtung zum Filtern von Flüssigkeiten, insbesondere Getränken.**

(57) Die Erfindung betrifft eine Filtervorrichtung zum Filtern von Flüssigkeiten, insbesondere Getränken.

Um bei einer solchen Filtervorrichtung eine wirksame Abdichtung zwischen zwei übereinanderliegenden Filterträgern und dem dazugehörigen Filterkörper herbeizuführen, ist vorgesehen, daß in der Oberseite eines darunterliegenden Filterträgers eine sich nach oben öffnende, im Querschnitt etwa trapezförmige Nut ausgebildet ist, deren innenliegende Nutwand im wesentlichen parallel zur Innenwand der Schürze des jeweiligen darüberliegenden Filterträgers ist, und daß die Profildichtung insgesamt einen im wesentlichen rechteckigen Querschnitt aufweist, wobei der sich auf dem jeweils unteren Filterträger abstützende Abschnitt der Profildichtung dem Nutquerschnitt angepaßt ist.

FIG. 2

## Filtervorrichtung zum Filtern von Flüssigkeiten, insbesondere Getränken

Die Erfindung bezieht sich auf eine Filtervorrichtung zum Filtern von Flüssigkeiten, insbesondere Getränken, mit mehreren turmartig übereinander angeordneten Filterträgern mit einer zentrischen Öffnung und zwischen den Filterträgern liegenden Filterkörpern, sowie mit jeweils zwischen den Filterträgern am Außenrand der Filterkörper angeordneten, umlaufenden Profildichtungen, die mit einem oberen, im Querschnitt im wesentlichen rechteckigen Abschnitt zwischen einer schräg nach außen und unten gerichteten Innenwand einer umlaufenden Schürze eines oberen Filterträgers und dem auf dem darunter befindlichen Filterträger aufliegenden Filterkörper angeordnet ist, wobei sich ein unterer Abschnitt der Profildichtung auf der Oberseite des darunter befindlichen Filterträgers abstützt.

Eine Filtervorrichtung der eingangs genannten Art ist in dem deutschen Gebrauchsmuster G 87 14 993 beschrieben. Ähnlich aufgebaute Filtervorrichtungen sind auch in der DE-PS 32 34 560 und der DE-OS 34 03 738 beschrieben. Es handelt sich hierbei um Filtervorrichtungen, die aus aufeinandergetürmten Filterträgern bestehen, die jeweils eine nach unten weisende kegelstumpfförmige Form mit einer zentrischen Öffnung aufweisen. Auf der Ober- und Unterseite der Filterträger sind sich radial erstreckende Riffelungen vorgesehen. Zwischen zwei übereinander angeordneten Filterträgern ist ein Filterkörper angeordnet, der von der zu filtrierenden Flüssigkeit durchströmt wird, die an der zentrischen Öffnung durch die oberen Riffelkanäle eines unteren Filterträgers strömt und von dort durch den Filterträger gedrückt wird und radial nach außen in den auf der Unterseite des darüberliegenden Filterträgers vorgesehenen Riffelkanälen ausströmt. Die Filterkörper bestehen aus einem porösen Filtermaterial, daß mit einem wasserlöslichen Bindemittel, zumeist Zucker, gebunden wird, so daß die Filterkörper beim Zusammenbauen der Filtervorrichtung, also beim Übereinanderschichten der Filterträger und Filterkörper eine ausreichende Eigenstabilität aufweisen. Vor dem Einsatz der Filtervorrichtung wird diese mit Wasser durchströmt, wodurch das Volumen der Filterkörper abnimmt und diese in der Höhe von ca. 30 mm auf 20 mm zusammenschrumpfen, da das Bindemittel herausgespült wird. Der Filterkörper wird nicht nur durch die jeweils übereinanderliegenden Filterträger begrenzt, sondern auch durch zwei umlaufende Dichtungen, wobei eine innere unmittelbar an der zentrischen Öffnung angebracht ist, während eine äußere am Außenrand des Filterkörpers vorgesehen ist. Diese Dichtungen sind dafür verantwortlich, daß zum einen die zu filternde Flüssigkeit nur auf dem vorgesehenen Strömungsweg den Filterkörper durchströmen kann, um einen Strömungskurzschluß zwischen einer gefilterten und einer ungefilterten Flüssigkeit zu vermeiden, zum anderen verhindern die Dichtungen ein Austreten des Filtermaterials. Bei der Filtervorrichtung gemäß dem deutschen Gebrauchsmuster G 87 14 993 weist jeder Filterträger außen um die erste Schürze einen Ablaufrand auf, der mit vertikalen Kanälen durchsetzt ist. Am äußeren Rand dieses Ablaufrandes sind nochmals umlaufende Profildichtungen vorgesehen, die in Nuten eingesetzt, jeweils zwei Filterträger gegeneinander abdichten, wobei durch die Vielzahl übereinandergetürmter Filterträger ein ringartiger Ablaufkanal für die gefilterte Flüssigkeit erreicht wird. Da vor dem Inbetriebnehmen der Filtervorrichtung, beim Ausspülen des Bindemittels aus dem Filterkörper, eine Schrumpfung der Filterkörper in der Höhe um ca. 1/3 auftritt, müssen die Profildichtungen in der Lage sein, diesen Schrumpfungsprozeß mitzumachen. Die Filterträger werden zudem von vertikal wirkenden Andrückelementen, meist einer Hydraulikvorrichtung mit einem vorbestimmten Druck zusammengehalten, um eine für den Filterprozeß gewünschte Dichte des Filtermaterials zu bewirken. Um den Schrumpfungsprozeß mitmachen zu können, ist bei dem bekannten Filter die außen am Filterkörper anliegende Profildichtung in ihrem unteren Abschnitt mit einer großen, sich in Profillängsrichtung erstreckenden Luftkammer ausgebildet. Diese Luftkammer bewirkt, daß sich die Profildichtung in ihrer Höhe um den entsprechenden Betrag, um den der Filterkörper beim Herausspülen des Bindemittels schrumpft, nachgeben kann. Beim Schrumpfen legt sich der untere Abschnitt der Profildichtung wie der untere Schenkel eines L-Profil auf die' Oberseite des jeweils darunterliegenden Filterträgers. Die äußere Profildichtung am Rand des Ablaufrandes weist im wesentlichen einen Kreisquerschnitt auf mit einem oberen und unteren angesetzten Steg, der jeweils in Nuten der übereinanderliegenden Filterträger eingreift. Auch in dieser Profildichtung ist eine sich in Längsrichtung des Profils erstreckende Hohlkammer vorgesehen, um den Schrumpfungsprozeß ausgleichen zu können.

Bei den Dichtungen hat sich als nachteilig herausgestellt, daß mit zunehmender Abwärtsbewegung der Filterträger, beim Schrumpfen der Filterkörper eine Versteifung des unteren Abschnitts der Profildichtung auftritt. Der von der Hydraulikvorrichtung in vertikaler Richtung auf die Filtervorrichtung ausgeübte Druck wird somit zum Teil auf unkontrollierte Art und Weise durch die Profildichtungen zwischen den Filterträgern abgefangen, so daß sich nicht mehr eindeutig von dem aufgebrachten Hydraulikdruck auf die Dichte des Filtermaterials schließen läßt. Zudem ist stets ein höherer Hydraulikdruck notwendig, da ein Großteil des Drucks über die Profildichtungen abgefangen wird. Ein weiteres Problem bei den bekannten Profildichtungen besteht darin, daß während des Betriebs die Luft aus den Hohlräumen durch die Dichtungswandung hindurch nach außen diffundiert, so daß beim Austauschen der Filterkörper die Dichtungen häufig nicht wiederverwendet werden können, da sie im Bereich der Hohlräume kollabiert sind und nicht mehr die nötige Elastizität aufweisen.

Es ist daher Aufgabe der vorliegenden Erfindung, eine Filtervorrichtung der eingangs genannten Art so zu verbessern, daß jeweils zwischen zwei übereinanderliegenden Filterträgern bzw. dem zugehörigen Filterkörper eine wirksame Abdichtung erreicht wird, wobei die Dichtungen wiederverwendbar sein sollen und die Vorspannung der Filterkörper möglichst wenig beeinflussen sollen.

Diese Aufgabe wird erfindungsgemäß dadurch gelöst, daß in der Oberseite des darunterliegenden Filterträgers eine sich nach oben öffnende, im Querschnitt etwa trapezförmige Nut ausgebildet ist, deren innenliegende Nutwand im wesentlichen parallel zur Schürze des jeweils darunterliegenden Filterträgers ist, und daß die Profildichtung insgesamt einen im wesentlichen rechteckigen Querschnitt aufweist, wobei der sich auf dem jeweils unteren Filterträger abstützende Abschnitt der Profildichtung dem Nutquerschnitt angepaßt ist.

Diese Lösung hat den Vorteil, daß die Profildichtung nunmehr fest in den jeweils unteren Filterträger eingesetzt ist, während sich beim Schrumpfungsprozeß beim Ausspülen des Bindemittels der darüberliegende Filterträger nach unten absenken kann, wobei die schräg nach außen gerichtete Innenwand der nach unten weisenden Schürze des jeweils darüberliegenden Filterträgers an der Außenseite der im Querschnitt rechteckförmigen Profildichtung entlanggleitet. Durch die erfindungsgemäße Anordnung kann der obere Filterträger relativ weit absinken, ohne daß die umlaufende Profildichtung sehr stark zusammengedrückt wird. Die Profildichtung kann daher verhältnismäßig massiv ausgebildet sein, so daß sie ohne weiteres mehrfach verwendbar ist. Durch die relativ leichte Verschiebbarkeit lastet der durch die Vorspanneinrichtung vertikal auf die Filterträger ausgeübte Druck im wesentlichen vollständig auf den Filterkörpern, so daß von der Vorspannkraft unmittelbar auf die Dichte des Filtermaterials geschlossen werden kann.

Die Belastung der Dichtung, insbesondere gegenüber dem Flüssigkeitsdruck läßt sich in vorteilhafter Weise dadurch verringern, daß sich die innenliegende Nutwand der Trapeznut des jeweils unteren Filterträgers und die Innenwand der Schürze des jeweils oberen Filterträgers im Betriebszustand der Filtervorrichtung in der Höhe zumindest nahezu überlappen. Mit Betriebszustand ist hier der Zustand der Filtervorrichtung gemeint, in dem sich diese nach dem Herausspülen des Bindemittels aus den Filterkörpern befindet, nachdem also die Filterkörper zusammengeschrumpft sind. Diese Anordnung zwischen der innenliegenden Nutwand der Trapeznut und der Innenwand der Schürze bewirkt, daß sich die Profildichtung nicht nach außen ausbeulen kann.

Bei Filtervorrichtungen der eingangs genannten Art, bei denen jeder Filterträger außerhalb der Profildichtung einen Ablaufrand für die gefilterte Flüssigkeit aufweist, wobei zwischen den Ablaufrändern zweier übereinanderliegender Filterträger jeweils eine umlaufende zweite Profildichtung zur Bildung eines nach außen abgedichteten, vertikalen Ablaufkanals zwischen der ersten Profildichtung und der äußeren zweiten Profildichtung vorgesehen ist, ist es besonders günstig, wenn an der Unterseite des äußeren Ablaufrandes jeweils eine nach unten ragende zweite Schürze mit einer schräg nach außen verlaufenden Innenwand als Anlagefläche für die äußere zweite Profildichtung ausgebildet ist, und wenn auf der Oberseite des äußeren Ablaufrandes des jeweils darunterliegenden Filterträgers eine sich nach oben öffnende, umlaufende und im Querschnitt im wesentlichen trapezförmige Nut zur Aufnahme der zweiten Profildichtung ausgebildet ist, deren innenliegende Nutwand im wesentlichen parallel zur Innenwand der zweiten Schürze ausgebildet ist.

Durch diese Ausgestaltung des äußeren Ablaufrandes der Filterträger kann auch die zweite Profildichtung genauso ausgebildet sein, wie die erste Profildichtung. Die Funktionsweise ist hier wie dort die gleiche. Durch die schräge Anordnung der Innenwand der zweiten Schürze und die dazu parallele innenliegende Nutwand wird erreicht, daß sich die Filterträger setzen können, ohne daß die Profildichtungen hierbei zu stark zusammengedrückt werden. Desweiteren wird über die schräge Anordnung eine selbsttätige Zentrierung beim Aufeinandertürmen der Filterträger erreicht.

Es hat sich als günstig herausgestellt, wenn bei der äußeren Nut für die zweite Profildichtung die innenliegende Nutwand in der Höhe über die außenliegende Nutwand hinausragt und etwa so hoch ist wie die zweite Profildichtung. Auf diese Weise wird die zweite Profildichtung über ihre gesamte Höhe gestützt, während die zweite Schürze des darüberliegenden Filterträgers beim Schrumpfungsprozeß der Filterkörper auf der Außenseite der Dichtung herabgleitet.

Als besonders günstig wird es angesehen, wenn der Winkel zwischen der Innenwand der Schürze und der Vertikalen etwa 10 bis 25 ° beträgt. Dies gilt gleichermaßen für die erste wie auch die zweite Schürze, die vorzugsweise parallel zueinander liegen.

Wenn die erste und die zweite Profildichtung denselben Querschnitt aufweisen, wird die Lagerhaltung wesentlich vereinfacht, da für die Abdichtung der Filterkörper und der Filterträger jeweils das gleiche Dichtungsprofil verwendet werden kann.

Die Dichtwirkung der Profildichtungen läßt sich weiter noch dadurch verbessern, wenn der obere, außerhalb der Nut liegende Abschnitt der Profildichtungen mit sich in Längsrichtung der Dichtung erstreckenden, tannenbaumartig übereinander angeordneten Dichtlippen ausgebildet ist. Diese Dichtlippen erleichtern ein Zusammendrücken des Dichtungsprofiles und verringern auf diese Weise zusätzlich den Widerstand der Profildichtungen beim Schrumpfungsprozeß der Filterkörper, wenn die Filtervorrichtung zum Entfernen des Bindemittels durchgespült wird.

Aus dem gleichen Grunde ist es günstig, wenn der obere, außerhalb der Nut liegende Abschnitt der Profildichtungen mit mehreren übereinander angeordneten und sich in Längsrichtung der Dichtung erstreckenden Luftkammern ausgebildet ist. Diese Luftkammern sind naturgemäß sehr klein, so daß sie zwar die Nachgiebigkeit der Profildichtungen in geringem Maße verbessern, jedoch keine größeren Verformungen zulassen.

Im folgenden wird ein Ausführungsbeispiel der Erfindung anhand einer Zeichnung näher erläutert. Es zeigen:

Fig. 1 eine Gesamtansicht einer erfindungsgemäßen Filtervorrichtung, und

Fig. 2 in einer vergrößerten Detailansicht einen Schnitt durch mehrere übereinander angeordnete Filterträger.

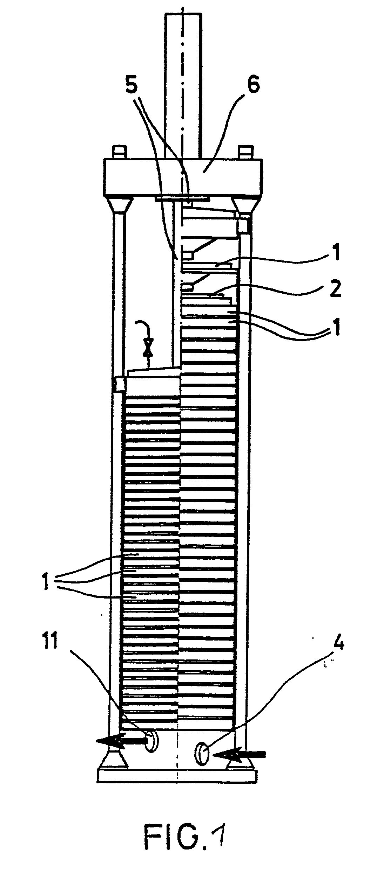

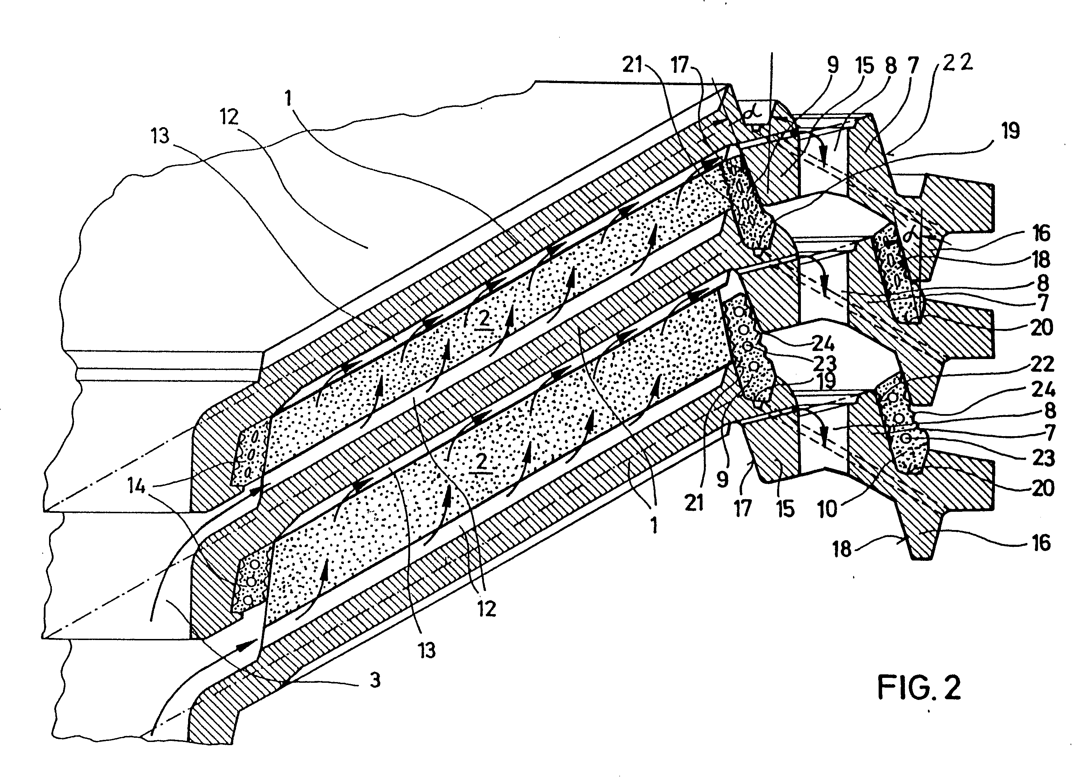

In Fig. 1 ist eine erfindungsgemäße Filtervorrichtung zum Filtern von Flüssigkeiten, insbesondere Getränken dargestellt. Die Filtervorrichtung besteht aus einem Turm übereinander angeordneter Filterträger 1, zwischen denen Filterkörper 2 angeordnet sind (vgl. Fig. 2). Die Filterträger 1 weisen eine zentrale Öffnung 3 auf, so daß in der Mitte der Filtervorrichtung ein zentraler Einströmkanal entsteht, der unten mit einer Zuleitung 4 verbunden ist. Von oben auf den obersten Filterträger 1 drückt ein Hydraulikkolben 5, der an einer Traverse 6 befestigt ist.

Dir rechte Hälfte der Fig. 1 zeigt die Filtervorrichtung nach einem Aufeinanderstapeln der Filterträger 1 und vor dem Durchspülen der Filtervorrichtung zum Entfernen des Bindemittels aus den Filterkörpern, während die linke Hälfte der Fig. 1 die Vorrichtung im Betriebszustand, also nach dem Durchspülen zeigt.

Wie besser aus Fig. 2 ersichtlich ist, weisen die Filterträger radial außen einen Ablaufrand 7 auf, der jeweils mit mehreren axialen Bohrungen 8 durchsetzt ist. Der Ablaufrand 7 ist sowohl radial nach außen als auch radial nach innen zum Filterkörper 2 hin jeweils durch eine Profildichtung 9 bzw. 10 abgedichtet, so daß durch die turmartig übereinandergeschichteten Filterträger 1 im Bereich des Ablaufrandes 7 ein sich vertikal erstreckender Ringkanal gebildet wird, der unten an der Filtervorrichtung in einen Auslauf 11 mündet. Eine solche Vorrichtung ist näher auch in dem deutschen Gebrauchsmuster G 87 14 993 beschrieben.

Wie besser aus Fig. 2 hervorgeht, sind die Filterträger kegelstumpfartig ausgebildet und weisen trichterförmig nach unten. Jeweils auf der Oberseite und der Unterseite eines Filterträgers 1 sind Rippenfelder 12 und 13 mit sich radial erstreckenden Rippen vorgesehen, zwischen welchen die zu filternde Flüssigkeit hindurchströmen kann. Der Strömungsweg der Flüssigkeit ist in Fig. 2 durch die Pfeile angedeutet.

Die Filterkörper 2 liegen jeweils auf dem oberen Rippenfeld 12 des jeweils unteren Filterträgers 1 auf. Auf ihrer Oberseite werden sie von dem unteren Rippenfeld des jeweils darüberliegenden Filterträgers 1 abgedeckt. Radial innen und radial außen werden die Filterkörper 2 durch eine Profildichtung 14 und die Profildichtung 9 abgedichtet. Aus der Darstellung in Fig. 2 ist erkennbar, daß der obere Filterkörper 2 dünner ist, als der untere Filterkörper 2'. Durch den unteren Filterkörper 2' soll dessen Zustand veranschaulicht werden, bevor das Bindemittel (Zucker) aus dem Filterkörper herausgespült wird. Bei dem Filterkörper 2 hingegen ist das Bindemittel bereits herausgespült worden, so daß sich der Filterkörper 2 bereits gesetzt hat. Während die innere Profildichtung im wesentlichen genauso ausgebildet ist wie beim deutschen Gebrauchsmuster G 87 14 993, ist die Anordnung der ersten Profildichtung 9 und der äußeren zweiten Profildichtung 10 besonders gewählt worden.

Es ist erkennbar, daß die Filterträger 1 auf ihrer Unterseite an dem äußeren Rand eine nach unten weisende erste innere Schürze 15 und eine mit radialem Abstand dazu liegende zweite äußere Schürze 16 aufweisen, wobei die äußere Schürze 16 auch noch axial weiter unten angeordnet ist, als die innere Schürze 15. Beide Schürzen 15 und 16 weisen schräg nach außen gerichtete Innenwände 17 und 18 auf, an denen die Außenseite der Profildichtungen 9 und 10 anliegen. Der Winkel α, der sich schräg nach außen erstreckenden Innenwände 17 und 18 zur Vertikalen beträgt bei dem hier gezeigten Ausführungsbeispiel 20°.

Korrespondierend zu den Schürzen 15 und 16 sind auf der Oberseite des jeweilig darunterliegenden Filterträgers sich nach oben öffnende, im Querschnitt trapezförmige Nuten 19 und 20 vorgesehen. Die radial innenliegende Nutwand 21 bzw. 22 ist im wesentlichen parallel zu der jeweiligen Innenwand 17 bzw. 18 der zugehörigen Schürze 15 bzw. 16 ausgerichtet. Beide Profildichtungen 9 und 10 weisen einen im wesentlichen rechteckigen Querschnitt auf, wobei jedoch das untere, in die jeweilige Nut 19 bzw. 20 eingesetzte Ende der Trapezform der Nut angepaßt ist. Dadurch ist die Profildichtung oberhalb der Nut 19 bzw. 20 geringfügig dicker als im übrigen Bereich.

Die innere Nutwand 21 der ersten Nut 19 ragt geringfügig über die äußere Nutwand der Nut 19 heraus, so daß sich die Nutwand 21 im Betriebszustand, wenn also der Filterkörper 2 zusammengedrückt ist, in der Höhe mit der Innenwand 17 der ersten Schürze 15 überlappt.

Die innere Nutwand 22 der äußeren Trapeznut 20 ragt hingegen wesentlich weiter über die Nut 20 hinaus und entspricht in ihrer Höhe etwa der Höhe der zweiten Profildichtung 10. Dadurch liegt die zweite Profildichtung 10 mit ihrer Innenseite vollflächig an der inneren Nutwand 22 an und wird von dieser gestützt.

Aus Fig. 2 ist deutlich zu erkennen, daß sowohl die erste als auch die zweite Profildichtung den gleichen Querschnitt aufweisen. In dem aus der jeweiligen Nut 19 bzw. 20 hinausragenden Bereich weisen die Profildichtungen 9 und 10 tannenbaumartig übereinander angeordnete, und sich in Profillängsrichtung erstreckende Dichtlippen 24 auf. Im Inneren des sich außerhalb der jeweiligen Nut 19 bzw. 20 befindlichen Bereichs sind die Profildichtungen 9 und 10 durch sich in Profillängsrichtung erstreckende Hohlräume 23 durchsetzt.

Im folgenden wird die Wirkungsweise der erfindungsgemäßen Filtervorrichtung näher erläutert.

Zunächst werden, wie aus der rechten Hälfte aus Fig. 1 ersichtlich ist, jeweils abwechselnd Filterträger 1 und Filterkörper 2' aufeinander gestapelt, wobei in den Nuten 19 und 20 der Filterträger bereits die Profildichtungen 9 und 10 eingesetzt sind. Wie aus dem unteren Bereich in Fig. 2 ersichtlich ist, weist der Filterkörper 2' noch Bindemittel auf und besitzt daher noch eine relativ große Höhe. Die Profildichtungen 9 und 10 sind noch relativ entspannt, die Hohlräume 23 sind offen und die Dichtlippen 24 kaum deformiert. Es ist leicht vorstellbar, daß durch die schräge Anordnung der Profildichtungen 9 und 10 ein selbsttätiges Zentrieren der Filterträger erfolgt, wenn diese übereinandergestapelt werden. Bereits in dem in der unteren Hälfte von Fig. 2 gezeigten Zustand bewirken die Profildichtungen 9 und 10 eine Abdichtung zwischen den übereinander angeordneten Filterträgern einerseits und zwischen den Filterträgern und dem Filterkörper 2' andererseits. Wenn alle Filterträger übereinandergestapelt sind, wird die Filtervorrichtung mit Wasser durchgespült. Das Wasser strömt dann jeweils entsprechend den Pfeildarstellungen durch die Filterkörper 2' und befreit dabei das Filtermaterial von dem Bindemittel, z. B. Zucker. Das Bindemittel wird durch die vertikalen Bohrungen 8 in dem Ablaufrand 7 gespült und gelangt von dort durch den Auslauf 11 aus der Filtervorrichtung. Bei diesem Spülvorgang nimmt das Volumen der Filterkörper 2 ab, weshalb sich die Filtervorrichtung setzt (vgl. linke Hälfte der Fig. 1). Das bedeutet der jeweils obere Filterträger 1 bewegt sich in vertikaler Richtung auf den jeweils unteren Filterträger 1 zu. Dabei gleiten die jeweils oberen Filterträger mit den Innenwänden 17 und 18 ihrer Schürzen 15 und 16 auf den Außenseiten der Profildichtungen 9 und 10 entlang, wobei die Profildichtungen 9 und 10 in Dickenrichtung geringfügig zusammengedrückt werden, wie aus der oberen Hälfte der Fig. 2 ersichtlich ist. Nachdem das Bindemittel vollständig aus den Filterkörpern 2 ausgeschwemmt ist, wird über den Hydraulikkolben 5 ein Druck auf die aus den Filterträgern 1 stehende Säule ausgeübt, womit dem Filtermaterial die jeweils gewünschte Dichte verliehen wird. Wie aus der oberen Hälfte aus Fig. 2 ersichtlich ist, stützt sich die äußere Schürze 16 zusätzlich mit ihrer Unterkante noch auf einer leicht nach außen gewölbten Wulst der zweiten Profildichtung 10 ab, wodurch die Dichtungswirkung dort noch weiter verbessert wird.

Die Filtervorrichtung kann nun in Betrieb genommen werden, wobei die zu filternde Flüssigkeit die Vorrichtung entsprechend der Pfeildarstellung durchströmt.

Wenn die Filterkörper ausgetauscht werden, können die Profildichtungen 9 und 10 an Ort und Stelle verbleiben. Sie müssen nicht ausgetauscht werden, da sie massiv genug sind um sämtlichen Belastungen mehrfach standzuhalten.

**Ansprüche**

1. Filtervorrichtung zum Filtern von Flüssigkeiten, insbesondere Getränken, mit mehreren turmartig übereinander angeordneten Filterträgern mit einer zentrischen Öffnung und zwischen den Filterträgern liegenden Filterkörpern, sowie mit jeweils zwischen den Filterträgern am Außenrand der Filterkörper angeordneten, umlaufenden Profildichtungen, die mit einem oberen, im Querschnitt im wesentlichen rechteckigen Abschnitt zwischen einer schräg nach außen und unten gerichteten Innenwand einer umlaufenden Schürze eines oberen Filterträgers und dem auf dem darunter befindlichen Filterträger aufliegenden Filterkörper angeordnet ist, wobei sich ein unterer Abschnitt der Profildichtung auf der Oberseite des darunter befindlichen Filterträgers abstützt, dadurch **gekennzeichnet,**

daß in der Oberseite des darunterliegenden Filterträgers (1) eine sich nach oben öffnende, im Querschnitt etwa trapezförmige Nut (19) ausgebildet ist, deren innenliegende Nutwand (21) im wesentlichen parallel zur Innenwand (17) der Schürze (15) des jeweils darüberliegenden Filterträgers (1) ist, und daß die Profildichtung (9) insgesamt einen im wesentlichen rechteckigen Querschnitt aufweist, wobei der sich auf dem jeweils unteren Filterträger (1) abstützende Abschnitt der Profildichtung dem Nutquerschnitt angepaßt ist.

2. Filtervorrichtung nach Anspruch 1, dadurch **gekennzeichnet**, daß sich die innenliegende Nutwand (21) der Trapeznut (19) des jeweils unteren Filterträgers (1) und die Innenwand (17) der Schürze (15) des jeweils obereren Filterträgers (1) im Betriebszustand der Filtervorrichtung in der Höhe zumindest nahezu überlappen.

3. Filtervorrichtung nach Anspruch 1, wobei jeder Filterträger außerhalb der Profildichtung einen Ablaufrand für die gefilterte Flüssigkeit aufweist, wobei zwischen den Ablaufrändern zweier übereinanderliegender Filterträger jeweils eine umlaufende, zweite Profildichtung zur Bildung eines nach außen abgedichteten, vertikalen Ablaufkanals zwischen der ersten Profildichtung und der äußeren zweiten Profildichtung vorgesehen ist, dadurch **gekennzeichnet**, daß an der Unterseite des äußeren Ablaufrandes (4) jeweils eine nach unten ragende, zweite Schürze (16) mit einer schräg nach außen verlaufenden Innenwand (18) als Anlagefläche für die äußere, zweite Profildichtung (10) ausgebildet ist, und daß auf der Oberseite des äußeren Ablaufrandes (7) des jeweils darunterliegenden Filterträgers (1) eine sich nach oben öffnende, umlaufende und im Querschnitt im wesentlichen trapezförmige Nut (2) zur Aufnahme der zweiten Profildichtung (10) ausgebildet ist, deren innenliegende Nutwand (22) im wesentlichen parallel zur Innenwand (18) der zweiten Schürze (16) ausgerichtet ist.

4. Filtervorrichtung nach einem Ansprüche 1 bis 3, dadurch **gekennzeichnet**, daß bei der äußeren Nut (20) für die zweite Profildichtung (10) die innenliegende Nutwand (22) in der Höhe über die außenliegende Nutwand herausragt und etwa so hoch ist wie die zweite Profildichtung (10).

5. Filtervorrichtung nach einem der Ansprüche 1 bis 4, dadurch **gekennzeichnet**, daß der Winkel (α) zwischen der Innenwand (17, 18) der Schürze (15, 16) und der Vertikalen etwa 10° bis 25° beträgt.

6. Filtervorrichtung nach einem der Ansprüche 1 bis 5, dadurch **gekennzeichnet**, daß die erste und die zweite Profildichtung (9, 10) denselben Querschnitt aufweisen.

7. Filtervorrichtung nach einem der Ansprüche 1 bis 6, dadurch **gekennzeichnet**, daß der obere, außerhalb der Nut (19, 20) liegende Abschnitt der Profildichtung (9, 10) mit sich in Längsrichtung der Dichtung (9, 10) erstreckenden, tannenbaumartig übereinander angeordneten Dichtlippen (24) ausgebildet ist.

8. Filtervorrichtung nach einem der Ansprüche 1 bis 7, dadurch **gekennzeichnet**, daß der obere, außerhalb der Nut (19, 20) liegende Abschnitt der Profildichtungen (9, 10) mit mehreren übereinander angeordneten und sich in Längsrichtung der Dichtung (9, 10) erstreckenden Luftkammern (23) ausgebildet ist.

FIG.1

FIG. 2

EP 0 368 076 A2

EP 5696